# DEMANDE DE BREVET EUROPEEN

(11) **EP 2 140 791 A1**
(43) Date de publication de la demande: **06.01.2010**
(21) Numéro de dépôt: 09356030.8
(22) Date de dépôt: 24.03.2009
(51) Int. Cl.: A47J 43/25

(54) **Tête de travail pour appareil électroménager de préparation culinaire prévu pour être tenu à la main**

(30) Priorité: 26.03.2008 FR 0801641; 26.03.2008 FR 0801642
(71) Demandeur: Seb SA, 69130 Ecully (FR)
(72) Inventeur: Lecerf, Joël, 50190 Periers (FR); Schlemmer, Maud, 75004 Paris (FR)
(74) Mandataire: Kiehl, Hubert

(57) **Abrégé**

Tête de travail (2) amovible pour boîtier moteur d'appareil électroménager de préparation culinaire prévu pour être tenu à la main, ladite tête de travail (2) comprenant un tambour rotatif pour râper ou couper des aliments et une goulotte (24) d'alimentation pour acheminer les aliments vers ledit tambour, le tambour étant entraîné en rotation autour d'un axe par un moteur, **caractérisé en ce que** ladite tête de travail (2) comporte des surfaces d'appui (28A, 29A) permettant de poser la tête de travail (2) en bordure d'un récipient (200) dans une position dans laquelle le tambour se trouve disposé sensiblement verticalement au-dessus du récipient (200).

## Description

La présente invention concerne le domaine technique général des appareils électroménagers de préparation culinaire prévus pour être tenus à la main et concerne plus particulièrement une tête de travail équipée d'un tambour permettant de râper les aliments pour un tel appareil électroménager.

Il est connu, du document US 4 856 718, un appareil électroménager comportant un boîtier prévu pour être tenu à la main renfermant un moteur accouplé à une tête de travail amovible équipée d'un tambour permettant de râper les aliments. La tête de travail est équipée d'une goulotte d'alimentation munie d'un poussoir permettant d'acheminer les aliments vers le tambour.

Un tel appareil présente cependant l'inconvénient d'être peu pratique à utiliser, l'utilisateur devant tenir le boîtier dans une main et le poussoir de l'autre main, puis exercer un effort important pour maintenir le boîtier en position lorsqu'il exerce une poussée sur le poussoir.

Il est connu du document US 5 680 997 de remédier en partie à cet inconvénient en proposant un appareil muni d'une embase moteur venant sous le tambour et sur laquelle l'appareil peut reposer lorsque l'utilisateur souhaite râper des aliments au-dessus d'une assiette.

Cependant, lorsque l'utilisateur souhaite râper les aliments dans un récipient plus haut, tel un saladier, il est toujours obligé de soulever l'appareil au-dessus du récipient, en le tenant d'une main, et en utilisant l'autre main pour actionner le poussoir. Il s'ensuit alors une position entraînant une utilisation très fatigante pour l'utilisateur. De plus, un tel appareil présente l'inconvénient de posséder un boîtier moteur massif qui est dédié à une utilisation avec une tête de travail munie d'un tambour pour râper les aliments et qui est inadapté pour une utilisation avec un pied mixeur.

L'invention qui suit vise à pallier ces inconvénients en proposant une tête de travail pour appareil électroménager de préparation culinaire qui puisse indifféremment être utilisée au-dessus d'une assiette ou au-dessus d'un récipient plus haut, tel un saladier, avec une grande ergonomie d'utilisation et en particulier en ne réclamant qu'un effort réduit pour le maintien de l'appareil de la part de l'utilisateur.

Le but de l'invention est atteint par une tête de travail amovible pour boîtier moteur d'appareil électroménager de préparation culinaire prévu pour être tenu à la main, la tête de travail comprenant un tambour rotatif pour râper ou couper des aliments et une goulotte d'alimentation pour acheminer les aliments vers le tambour, ce dernier étant entraîné en rotation autour d'un axe D par un moteur, **caractérisé en ce que** la tête de travail comporte des surfaces d'appui permettant de poser la tête de travail en bordure d'un récipient dans une position dans laquelle le tambour se trouve disposé sensiblement verticalement au-dessus du récipient.

Selon une autre caractéristique de l'invention, la tête de travail comporte au moins un pied sur lequel elle peut reposer lorsque l'appareil est utilisé horizontalement sur un plan de travail, le pied comportant une face latérale comprenant une des surfaces d'appui destinée à reposer en bordure du récipient.

Selon une autre caractéristique de l'invention, la surface d'appui est constituée par le fond d'une gorge formée sur une face latérale du pied.

Selon une autre caractéristique de l'invention, la tête de travail comporte deux pieds s'étendant de part et d'autre de l'axe D de rotation du tambour.

Selon une autre caractéristique de l'invention, les surfaces d'appui sont portées par les deux pieds et par un troisième élément porté par la goulotte d'alimentation.

Selon d'autres modes particuliers de réalisation, la tête de travail selon l'invention peut comprendre une ou plusieurs des combinaisons prises isolément ou selon toutes les combinaisons techniquement possibles :
- la goulotte d'alimentation est inclinée par rapport à l'axe D de rotation du tambour ;
- la tête de travail comporte un manchon d'accouplement avec un boîtier renfermant le moteur, la tête de travail comportant une poignée s'étendant entre la goulotte d'alimentation et le manchon d'accouplement ;
- la goulotte d'alimentation comporte un poussoir comprenant une languette venant dans le prolongement de la poignée ;
- la tête de travail comporte un réducteur de vitesse.

L'invention concerne également un appareil électroménager de préparation culinaire comportant un boîtier prévu pour être tenu en main renfermant un moteur, **caractérisé en ce qu**'il comporte une tête de travail selon l'invention.

Selon une autre caractéristique de l'invention, le boîtier présente une forme allongée dont l'axe longitudinal est disposé parallèlement à l'axe D de rotation du tambour.

Selon une autre caractéristique de l'invention, le boîtier est un boîtier moteur de pied mixeur.

L'invention concerne également une tête de travail, pour appareil électroménager de préparation culinaire prévu pour être tenu à la main, comportant un corps recevant un tambour rotatif pour râper ou couper des aliments et comprenant une goulotte d'alimentation pour acheminer les aliments vers le tambour, le corps comportant un manchon d'accouplement dans lequel vient s'engager un boîtier amovible comprenant un moteur pour l'entraînement en rotation du tambour autour d'un axe, **caractérisée en ce que** le corps de la tête de travail comporte une poignée s'étendant depuis le manchon d'accouplement jusqu'à la goulotte d'alimentation, la poignée présentant une zone de préhension s'étendant à proximité de la goulotte d'alimentation.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective, de trois quart avant, d'un appareil électroménager selon un mode particulier de réalisation de l'invention ;
- la figure 2 est une vue en perspective éclatée de l'appareil électroménager de la figure 1 ;
- la figure 3 est une vue, de trois quart arrière, en perspective de l'appareil de la figure 1 ;
- la figure 4 est une vue de côté de l'appareil utilisé en position horizontale au-dessus d'une assiette ;
- la figure 5 est une vue en perspective de l'appareil utilisé en position verticale sur un saladier.

Seuls les éléments nécessaires à la compréhension de l'invention ont été représentés. Pour faciliter la lecture des dessins, les mêmes éléments portent les mêmes références d'une figure à l'autre.

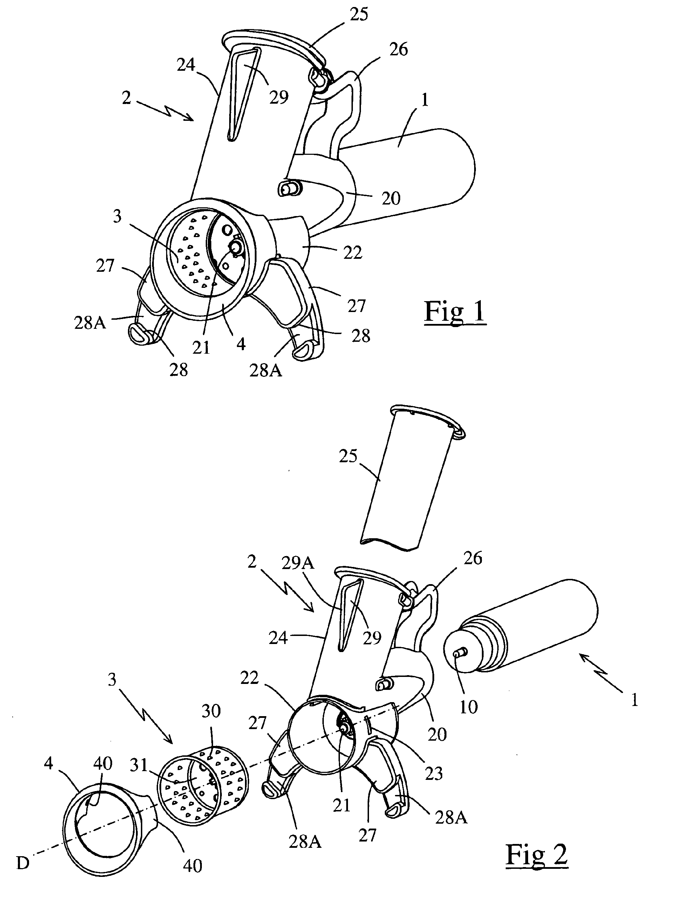

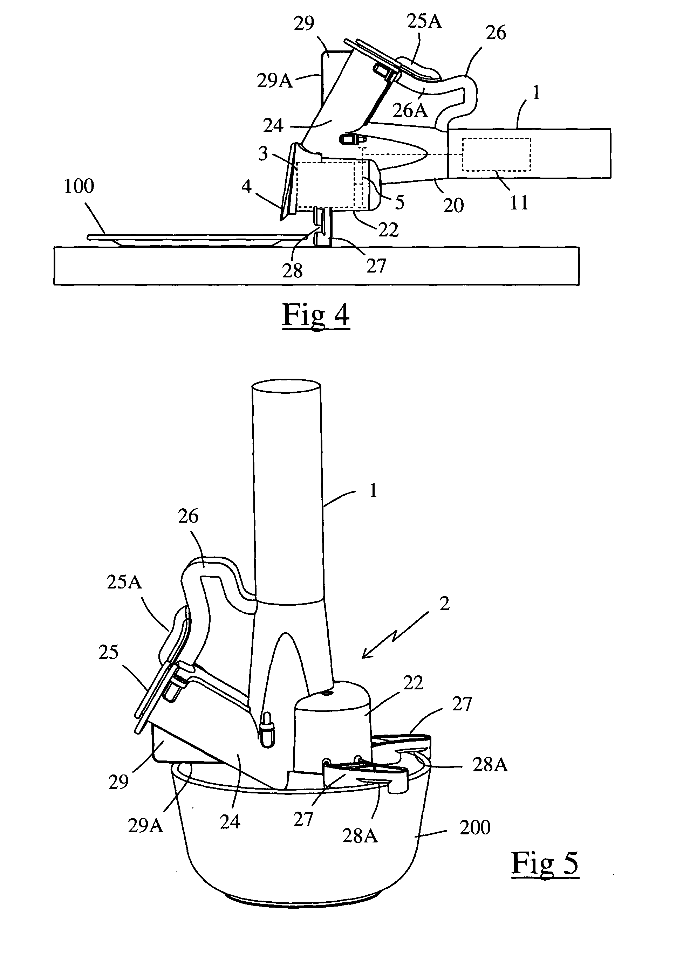

La figure 1 représente un appareil électroménager de préparation culinaire comportant un boîtier 1 de forme allongée renfermant un moteur 11, représenté schématiquement en pointillé sur la figure 4, dont une extrémité longitudinale est destinée à être accouplée à un accessoire, tel un pied mixeur ou, comme illustré sur la figure 1, à une tête de travail 2 pour râper les aliments. Ce boîtier 1 est alimenté, de manière connue en soi, par une batterie ou par un réseau électrique et le fonctionnement du moteur est commandé par un bouton, non représenté sur les figures, porté par le boîtier 1.

Conformément à la figure 2, la tête de travail 2 est montée de manière amovible sur le boîtier 1 et comporte à cet effet un manchon d'accouplement 20 dans lequel vient s'engager une extrémité du boîtier 1 comportant un arbre d'entraînement 10 solidaire du moteur.

La tête de travail 2 renferme préférentiellement un réducteur de vitesse 5, représenté schématiquement en pointillé sur la figure 4, disposé dans le prolongement du manchon d'accouplement 20 et formé classiquement par un train d'engrenages. Le réducteur 5 comporte un arbre de sortie muni d'un entraîneur 21 débouchant au centre d'une chambre définie par un corps cylindrique 22 décalé axialement de l'axe longitudinal du manchon d'accouplement 20.

La chambre reçoit un tambour 3 cylindrique muni de multiples ouvertures 30 coupantes permettant de râper les aliments. Le tambour 3 comporte un fond 31 comprenant une découpe de forme complémentaire à celle de l'entraîneur de sorte que le tambour est entraîné en rotation autour d'un axe D par ce dernier. La chambre comporte une ouverture frontale, par laquelle est introduit le tambour 3, qui reçoit une bague de maintien 4 comportant des griffes 40 venant s'engager dans des encoches 23 formées sur la surface extérieure du corps de la tête de travail 2.

Cette bague de maintien 4 vient en bordure de l'ouverture du corps cylindrique 22 et comporte une partie venant en regard de la périphérie du tambour 3 de manière à maintenir longitudinalement ce dernier dans la chambre. La bague de maintien 4 possède également une forme évasée favorisant le déversement des aliments issus du tambour 3 vers l'extérieur.

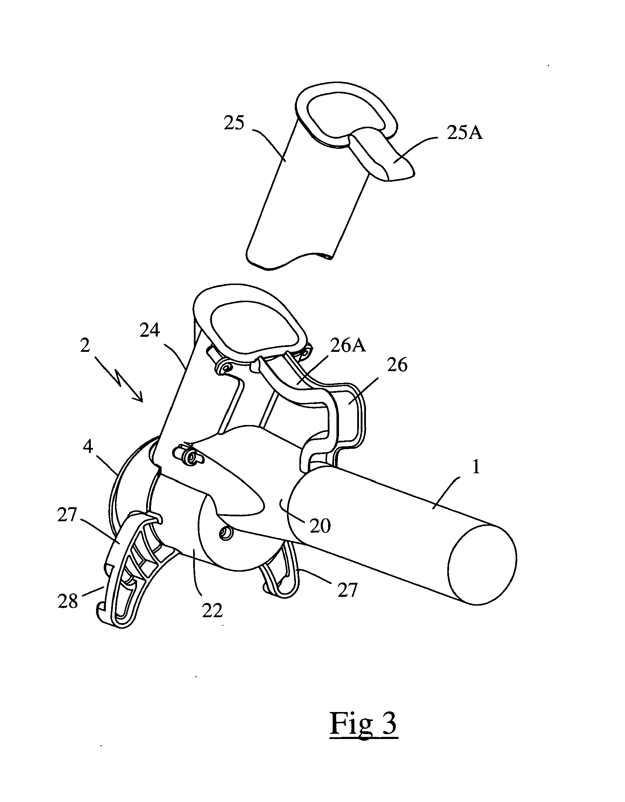

Conformément à la figure 3, la tête de travail 2 comporte une goulotte 24 d'alimentation débouchant dans la chambre, cette goulotte 24 permettant d'acheminer les aliments à râper, tels que des carottes ou du gruyère, vers le tambour 3. La goulotte 24 d'alimentation forme préférentiellement un angle de l'ordre de 60° par rapport à l'axe D de rotation du tambour et est inclinée en direction du manchon d'accouplement 20. La goulotte 24 reçoit un poussoir 25 et la tête de travail 2 comporte une poignée 26 présentant une zone de préhension 26A s'étendant à proximité de la goulotte 24 d'alimentation de sorte que l'appareil peut être saisi en mettant la main au plus près de l'axe du poussoir 25.

La poignée 26 s'étend depuis le sommet de la goulotte 24 jusqu'au manchon d'accouplement 20, la zone de préhension 26A de la poignée 26 s'étendant perpendiculairement à la goulotte 24 à proximité de cette dernière, puis présentant une légère courbure pour s'étendre sensiblement parallèlement à l'axe D de rotation du tambour 3 au-dessus du manchon d'accouplement 20. L'extrémité de la zone de préhension 26A est avantageusement reliée au manchon d'accouplement 20 par un bras de liaison en forme de S permettant d'obtenir une longueur de la zone de préhension 26A supérieure à la longueur du manchon d'accouplement 20.

Afin de permettre l'action sur le poussoir 25 et le maintien de l'appareil au moyen d'une seule main, le poussoir 25 comporte une extrémité supérieure munie d'une languette transversale 25A s'étendant au dessus de la poignée 26.

De manière avantageuse, la tête de travail 2 comporte deux pieds s'étendant dans un plan radial au tambour 3, les deux pieds 27 prenant naissance sur le corps cylindrique à 120° l'un de l'autre et s'étendant de part et d'autre de l'axe D de rotation du tambour 3, à l'opposé de la goulotte 24 d'alimentation, en présentant une forme légèrement courbe. Ces deux pieds 27 constituent des points d'appui sur lesquels la tête de travail 2 peut reposer lorsque l'appareil est utilisé sensiblement horizontalement au-dessus d'un récipient de faible hauteur, telle une assiette 100, ainsi que cela est illustré sur la figure 4.

Dans cette position de l'appareil, l'appui sur les deux pieds 27 permet de contrer le poids de l'appareil ainsi que l'effort généré par l'appui sur le poussoir 25, ce qui permet ainsi une utilisation peu fatigante de l'appareil. De plus, la position inclinée de la goulotte 24 d'alimentation permet d'avoir une bonne vision des aliments à la sortie du tambour 3.

Conformément à la figure 5, la tête de travail 2 comporte également des surfaces d'appui permettant de poser la tête de travail 2 en bordure d'un récipient 200, dans une position dans laquelle le tambour 3 est disposé sensiblement verticalement au-dessus du récipient 200.

Ces surfaces d'appui sont avantageusement réparties sur trois zones distinctes disposées approximativement à 120° les unes des autres de manière à procurer une stabilité optimale sur le bord récipient 200.

Ces surfaces d'appui sont préférentiellement constituées, d'une part par le fond 28A d'une gorge 28 réalisée sur la face latérale de chaque pied 27 venant en regard de la bordure du récipient 200 lorsque la tête de travail 2 est amenée verticalement au-dessus du récipient 200, et d'autre part par une arête 29A d'un élément support 29 s'étendant radialement à l'axe D du tambour, sur la goulotte 24 d'alimentation.

De manière avantageuse, l'arête 29A de l'élément support 29 s'étend dans le même plan que le fond 28A des gorges 28 de telle sorte que l'axe D du tambour 3 se retrouve dans une position approximativement verticale lorsque le fond 28A des gorges 28 repose en appui contre le bord du récipient 200 et que l'arête 29A de l'élément support 29 repose sur le bord du récipient 200.

De manière préférentielle, les gorges 28 s'étendent en arc de cercle et présentent une largeur de l'ordre de 1 cm, l'arête 29A s'étendant sur une longueur de l'ordre de 5 cm de sorte que la tête de travail 2 peut reposer sur des récipients 200 de différents diamètres, allant par exemple de 14 à 20 cm.

L'appareil ainsi réalisé possède une grande ergonomie d'utilisation lorsqu'il est utilisé dans cette position verticale sur un récipient 200 posé sur une table, l'utilisateur n'ayant qu'à maintenir l'appareil en saisissant d'une main le boîtier 1, ou la poignée 26, et à amener les aliments dans la goulotte 24 au moyen de l'autre main. Lors de cette opération, l'inclinaison de la goulotte 24 d'alimentation vers le boîtier 1 moteur présente l'avantage d'une plus grande ergonomie d'utilisation, la force générée par la poussée sur le poussoir 25 étant divisée en une résultante verticale supportée par le récipient 200 et une résultante horizontale contrée par le bras de l'utilisateur et par l'adhérence du récipient 200 sur la table.

Il en résulte une utilisation très ergonomique et peu fatigante de l'appareil sur un récipient présentant une hauteur importante tel un saladier.

De plus, la présence de la poignée 26 sur la tête de travail 2 permet d'avoir une poignée dont l'ergonomie est optimisée pour un plus grand confort d'utilisation de l'appareil, la zone de préhension 26A pouvant se trouver au plus près de l'axe de la goulotte 24 pour réduire le couple de basculement au niveau de la poignée 26 lorsqu'une pression est exercée sur le poussoir 25 et obtenir un meilleur équilibre de l'appareil. Une telle caractéristique permet également d'avoir un appareil dans lequel les efforts générés par la poussée sur le poussoir et par le maintien de la poignée sont concentrés sur la tête de travail, de sorte que le dispositif d'accouplement à la jonction entre la tête de travail et le boîtier moteur amovible n'est pas soumis à des efforts importants.

Enfin, la présence de la languette 25A sur l'extrémité du poussoir 25 dans l'axe D de la poignée permet à l'utilisateur de n'utiliser qu'une seule main pour maintenir l'appareil en position et appliquer une pression sur le poussoir 25. En effet, l'utilisateur peut saisir la tête de travail 2 par sa poignée 26, puis appliquer une pression sur le poussoir 25 en appuyant sur la languette 25A à l'aide de son pouce.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, le tambour et la chambre de réception du tambour pourront présenter une forme tronconique.

Ainsi, dans une autre variante de réalisation de l'invention, la tête de travail pourra comporter un seul pied plus massif.

## Revendications

1. Tête de travail (2) amovible pour boîtier moteur (1) d'appareil électroménager de préparation culinaire prévu pour être tenu à la main, ladite tête de travail (2) comprenant un tambour (3) rotatif pour râper ou couper des aliments et une goulotte (24) d'alimentation pour acheminer les aliments vers ledit tambour (3), le tambour (3) étant entraîné en rotation autour d'un axe (D) par un moteur 11, **caractérisée en ce que** ladite tête de travail (2) comporte des surfaces d'appui (28A, 29A) permettant de poser la tête de travail (2) en bordure d'un récipient (200) dans une position dans laquelle le tambour (3) se trouve disposé sensiblement verticalement au-dessus du récipient (200).

2. Tête de travail (2) selon la revendication 1, **caractérisée en ce qu'**elle comporte au moins un pied (27) sur lequel la tête de travail (2) peut reposer lorsque l'appareil est utilisé horizontalement sur un plan de travail et **en ce que** ledit pied (27) comporte une face latérale comprenant une des surfaces d'appui (28A) destinée à reposer en bordure du récipient (200).

3. Tête de travail (2) selon la revendication 2, **caractérisée en ce que** ladite surface d'appui (28A) est constituée par le fond d'une gorge (28) formée sur une face latérale du pied (27).

4. Tête de travail (2) selon l'une quelconque des revendications 2 à 3, **caractérisée en ce qu'**elle comporte deux pieds (27) s'étendant de part et d'autre de l'axe (D) de rotation du tambour.

5. Tête de travail (2) selon la revendication 4, **caractérisée en ce que** lesdites surfaces d'appui (28A, 29A) sont portées par lesdits deux pieds (27) et par un troisième élément (29) porté par la goulotte d'alimentation (24).

6. Tête de travail (2) selon l'une quelconque des revendications 1 à 5, **caractérisée en ce que** ladite goulotte d'alimentation (24) est inclinée par rapport à l'axe (D) de rotation du tambour (3).

7. Tête de travail (2) selon l'une quelconque des revendications 1 à 6, **caractérisée en ce qu'**elle comporte un manchon d'accouplement (20) avec un boîtier (1) renfermant le moteur et **en ce que** ladite tête de travail (2) comporte une poignée (26) s'étendant entre la goulotte d'alimentation (24) et le manchon d'accouplement (20).

8. Tête de travail (2) selon la revendication 7, **caractérisée en ce que** la goulotte d'alimentation (24) comporte un poussoir (25) comprenant une languette (25A) venant dans le prolongement de la poignée (26).

9. Tête de travail (2) selon l'une quelconque des revendications 7 à 8, **caractérisée en ce qu'**elle comporte un réducteur de vitesse (5).

10. Appareil électroménager de préparation culinaire comportant un boîtier (1) prévu pour être tenu en main renfermant un moteur, **caractérisé en ce qu'**il comporte une tête de travail (2) selon l'une quelconque des revendications 1 à 9.

11. Appareil électroménager selon la revendication 10, **caractérisé en ce que** ledit boîtier (1) présente une forme allongée dont l'axe longitudinal est disposé parallèlement à l'axe (D) de rotation du tambour (3).

12. Appareil électroménager selon la revendication 11, **caractérisé en ce que** le boîtier (1) est un boîtier moteur de pied mixeur.
